# EUROPEAN PATENT SPECIFICATION

(11) **EP 3 791 001 B1**
(45) Date of publication and mention of the grant of the patent: **09.08.2023**
(21) Application number: 19727099.4
(22) Date of filing: 06.05.2019
(51) Int. Cl.: C22B 3/16, C22B 1/248, C22B 3/38, C22B 3/22, C22B 7/00, C22B 59/00

(54) **HYDROMETALLURGICAL METHOD FOR THE TREATMENT OF PERMANENT MAGNETS**
HYDROMETALLURGISCHES VERFAHREN ZUR BEHANDLUNG VON DAUERMAGNETEN
PROCÉDÉ HYDROMÉTALLURGIQUE POUR LE TRAITEMENT D'AIMANTS PERMANENTS

(30) Priority: 08.05.2018 IT 201800005178
(43) Date of publication of application: 17.03.2021
(73) Proprietor: Universita' Degli Studi Dell'Aquila, 67100 L'Aquila (IT)
(72) Inventor: BIRLOAGA, Ionela, 67100 L'Aquila (IT); VEGLIO', Francesco, 67100 L'Aquila (IT)
(74) Representative: Cavattoni, Raimondi & Luppi Srl
(86) International application number: PCT/IB2019/053691
(87) International publication number: WO 2019/215583

(56) References cited:
- WO-A1-2017/207947
- DE-A1-102012 017 418
- EL-HEFNY N E ET AL: "Synthesis and characterization of neodymium phosphate powder resulted from neodymium loaded-HDEHP organic solutions by a strippingprecipitation process using a Lewis type cell", SEPARATION AND PURIFICATION TECHNOLOGY, ELSEVIER SCIENCE, AMSTERDAM, NL, vol. 78, no. 3, 15 January 2011 (2011-01-15), pages 330-335, XP028194435, ISSN: 1383-5866, DOI: 10.1016/J.SEPPUR.2011.01.027 [retrieved on 2011-01-26]

## Description

### Technical field of the invention

The present invention relates to a hydrometallurgical method which has as its main aim the recovery of the materials which form waste permanent magnets.

In particular, by means of the proposed method it is possible to recover elements belonging to the group of rare earths such as neodymium (Nd) and praseodymium (Pr) and metals such as, among others, iron (Fe) and nickel (Ni) from neodymium magnets.

### Prior art

During the last two decades, owing to their magnetic properties, permanent neodymium (Nd) magnets have aroused a considerable amount of interest in the industrial sector. These magnets are formed by an alloy consisting of boron (B), iron (Fe) and neodymium (Nd) and therefore are also known as NdFeB permanent magnets. The exact composition of each NdFeB magnet may vary depending on the use for which it is intended; generally they comprise rare elements constituting about 30% by weight: i.e. mainly neodymium (Nd) and smaller quantities of praseodymium (Pr) and dysprosium (Dy).

With the advance of technology, many commercial products which contain NdFeB magnets are substituted and replaced by new generations of products. It is evident that a problem of disposal of the magnetic components arises; to date, waste NdFeB magnets are for the most part disposed of in rubbish tips.

A sustainable recycling technology, in addition to the benefit arising from conservation of the primary resources, would allow environmental pollution to be reduced. For this reason, various mechanical, pyrometallurgical and hydrometallurgical technologies have been developed and described in the following patent documents: US 6533837, US 9725788, US 5238489, US 5437709, US 20140291161, US 20140356258. FR3052171 A1 discloses a method for extraction of Rare Earth elements contained in permanent magnets. Further, El-Hefny et al., Separation and Purification technology 78 (2011), pp. 330 - 335 show the synthesis and characterization of Neodymium Phosphate powder from neodymium loaded HDEHP organic solutions by a stripping-precipitation process using a Lewis type cell. However, each treatment method has its drawbacks.

As has been demonstrated by scientific literature, hydrometallurgical procedures are to be regarded as preferable to pyrometallurgical procedures: the former in fact may be more easily controlled and allow selective recovery of the elements with a smaller energy consumption. The main drawback of the hydrometallurgical methods is the production of large amounts of solid and liquid waste which have a negative impact on the environment and on human health unless they are correctly disposed of. The main aim of the present invention is to attempt to overcome the drawbacks of the prior art.

The present invention has the further advantage of reducing or eliminating the use of inorganic acids, which are traditionally used in similar processes.

The hydrometallurgical method according to the present invention is able to ensure the recovery of the main components of neodymium magnets and has the advantage that it does not require large amounts of costly chemical agents nor does it produce dangerous waste either in solid and/or liquid form, therefore resulting in an ecological and low-cost process.

### Bibliography

US 6533837, Method of recovering and recycling magnetic powder from rare earth bond magnet, Yoshikazu Yamagata, Fumitoshi Yamashita, 2003
US 9725788, Recovering heavy rare earth metals from magnet scrap, Ryan T. Ott, Ralph W. McCallum, Lawrence L. Jones, 2017 US5238489, Leaching/flotation scrap treatment method, Jane W. Lyman, Glenn R. Palmer, 1993
US5437709, Recycling of rare earth metals from rare earth-transition metal alloy scrap by liquid metal extraction, Timothy W. Ellis, Frederick A. Schmidt, 1995
US20140291161, Method for producing metal by molten salt electrolysis and apparatus used for the production method, Tomoyuki Awazu, Masatoshi Majima, 2014
US20140356258, Method for Separating and Recovering Rare-Earth Elements, Motoyuki Miyata, Hiroki Yamamoto, Hiroshi Sasaki, Toshio Yasuda, Katsuyoshi Furusawa, 2014

### Summary of the invention

The hydrometallurgical method for the treatment of waste permanent magnets is described in the attached claims.

Further subject-matter will become clear from the detailed description of the invention which follows.

### Brief description of the figures

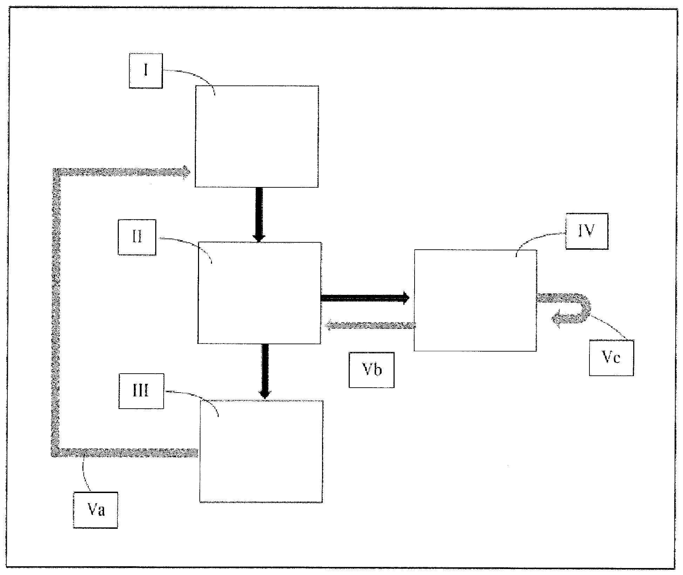

Figure 1 is a schematic diagram of the method according to the invention.

### Detailed description of the invention

The method for the treatment of neodymium magnets according to the invention comprises the following main operations:
I. obtaining suitably pre-treated neodymium (Nd) magnet powder and separating nickel in solid form by leaching said powder with citric acid and subsequent filtration so as to separate the nickel from the solution;
II. separating rare earth elements from the solution produced in the leaching stage (I) by means of extraction with organic solvent and subsequent separation of the aqueous phase, containing iron ions, and organic phase;
III. isolating by means of precipitation said rare earth elements in the form of phosphorus salts by stripping said organic phase with an aqueous phase of phosphoric acid, separation of the organic phase and aqueous phase, and filtration of the precipitate from said last aqueous phase;
IV. isolating by means of precipitation said iron ions in the form of oxalates by treating with oxalic acid the aqueous phase obtained from the organic solvent extraction stage (II) and subsequent filtration of the precipitate;
V. repeating stages I-IV for treatment of further neodymium (Nd) magnet powder so that the following conditions are satisfied:
   a) the solution obtained from separation of the iron (stage IV) is used for leaching of said further permanent magnet powder (step Va), as such or after addition of citric acid;
   b) the organic solution produced at the end of the stripping process with phosphoric acid (stage III) is used in the organic solvent extraction stage (stage II) to be carried out on the liquid component produced from leaching (step Vb);
   c) the aqueous solution produced at the end of the stripping process with phosphoric acid (stage III) is used in the stage for stripping of further organic phase (step Vc).

Particularly advantageous embodiments of the invention are obtained in accordance with the characteristic features of the dependent claims.

Since the reagents mainly used in this process are not inorganic acids and there is no production of waste in solid and/or liquid form, this method is considered to be low-cost and more sustainable from the environmental point of view than the processes which are currently used.

The process is schematically illustrated in Fig. 1. With reference to Fig. 1, the preferred, but non-limiting version of the invention is described in detail below. The process may be subject to numerous modifications and variants, all of which fall within the inventive idea expressed in the attached claims; all the details may be replaced by other technically equivalent elements and the materials may be different depending on the requirements, without departing from the scope of the invention.

The hydrometallurgical method is applied with success to waste NdFeB magnets. In order to obtain the desired results, these magnets are subjected to pre-treatment operations which are known and form part of the prior art. For example, these treatments are described in Lyman J.W. and Palmer G.R. 1993. Recycling of rare earths and iron from NdFeB magnet scrap. High Temperature Materials and Processes, 11(1-4), pp.175-88.

In general, the products which include magnetic components, for example the hard disks or hard disk drives (HDD) contained in computers, are disassembled and disposed of separately.

The sintered permanent magnets are then de-magnetized by means of heat treatment: the waste magnets are kept at temperatures of about 300-350°C, preferably at 320°C, for about 1-2 hours. After a cooling period, the magnets are generally ground with a planetary mill inside a jar using stainless steel balls.

The result produced by the pre-treatment is a powder formed by the same elements present in the basic NdFeB alloy of the waste magnets.

Said powder forms the starting material for the hydrometallurgical method according to the present invention. As will become clear from the detailed description which follows, each stage of the process shown in Figure 1 includes a plurality of steps which allow it to be correctly performed.

### I. Separation of solid nickel by means of leaching of neodymium magnet powder and subsequent filtration

The procedure according to stage I of claim 1 is described in detail

In a preferred embodiment of the invention, firstly an aqueous solution of citric acid is prepared: for the preparation, distilled water and a quantity of citric acid in the stoichiometric ratio required for leaching of elements contained in the powder are used.

Preferably the citric acid solution has a concentration of 1-2 M, even more preferably the concentration is equal to 1.5 M. It is assumed that the solid has a concentration of 5-15% by volume/weight.

The powder is added until a concentration value of 10-15% by weight/volume in the previously prepared citric acid solution is obtained. Preferably, the powder is added in amounts such that the concentration is equal to 10% by weight/volume.

The mixture thus obtained is stirred for a time period varying from 2 to 4 hours, preferably equal to 3 hours, at a speed of 200-400 rpm in ambient temperature and pressure conditions.

As will become clear from the description below, the citric acid solution may be replaced entirely or partly by the aqueous solution produced in the following stage IV.

Then the liquid phase is separated from the solid residue by means of a vacuum filtration process and the solid is further washed with distilled water. A volume of distilled water equal to 30% of the volume of leaching solution is considered suitable for the solid residue washing operations.

The solid residue obtained has a nickel (Ni) content of more than 60% by weight and is therefore considered to be an end product of the process. For the purposes of the present description, "nickel in solid form" is understood as meaning a material in the solid state containing at least 60% by weight of nickel.

For an optimum recovery of the constituents of the neodymium magnet powder, the solid obtained may be subjected to one or more washing operations using distilled water; the washing water has a high content of Nd, Pr and Fe. In a preferred embodiment of the invention, said washing water is then mixed with the liquid phase obtained from leaching (stage I) and then used for the extraction process with organic solvent (stage II).

The amount of neodymium (Nd), praseodymium (Pr) and iron (Fe) recovered is more than 98% by weight with respect to the amounts present in the starting material.

### II. Separation of the rare earths by means of extraction with organic solvent

The procedure corresponding to stage II of claim 1 is described in detail.

In a preferred embodiment of the invention, the organic solvent used is a solution of bis (2-ethylhexyl) phosphate (DEHPA or HDEHP) in n-heptane with a concentration in the range of 40-60% by volume, and preferably equal to 50%.

The volume ratio between aqueous phase and organic phase is between 0.5 - 1.5, and is preferably equal to 1.

In addition to or instead of the aforementioned organic solvent, the organic phase produced by the stripping process may be used in this stage. These aspects will be explained more fully below.

Said procedure is performed at room temperature, for a time period of between 15 and 20 minutes at a stirring speed of 200-300 rpm. In a preferred embodiment of the invention, in order to separate the two phases a mixer settler is used. In the aforementioned conditions, more than 99% by weight of Nd and Pr is extracted from the organic phase. About 2% of Fe is co-extracted during this process step.

### III. Isolation of the rare earths in the form of phosphorus salts by means of the stripping process

The procedure corresponding to stage III of claim 1 is described in detail.

The organic phase obtained downstream of the extraction stage using solvent (stage II) contains the elements belonging to the group of rare earths and therefore is treated in order to form precipitate which can be isolated by means of filtration.

For this purpose, the organic phase obtained from the extraction step with solvent (stage II) is subjected to a stripping process using an aqueous solution of phosphoric acid. In a preferred embodiment of the invention a volume ratio between aqueous phase and organic phase equal to about 1-2, preferably equal to 1.5. is used; the concentration of the aqueous solution of phosphoric acid is equal to about 1.5 - 2 M, and is preferably 1.8 M.

The stripping process is performed for a time period of about 1-2 hours in continuous stirring conditions at a speed in the region of 200-300 rpm. At the end of the stripping step, the phases are separated using for example the mixer settler. Once formed, the rare earth phosphates are recovered from the aqueous solution by means of filtration.

Following filtration, the aqueous solution may be used to feed the stripping process with further material containing rare earth elements.

During this step, a neodymium (Nd) and praseodymium (Pr) precipitation efficiency of more than 98% was achieved.

### IV. Isolation of iron ions in the form of oxalates by means of treatment with oxalic acid

The procedure corresponding to stage IV of claim 1 is described in detail.

The aqueous phase produced in stage II is rich in iron ions.

The same treatment aimed at separation of the dissolved iron ions may be applied to the aqueous solution which is obtained after the extraction step with solvent used to obtain the separation of the rare earths in the organic phase.

Oxalic acid with a concentration the same as or less than the stoichiometric quantity required for reaction with the iron, preferably 20% less than the stoichiometric ratio, may be added to said aqueous solution. The mixture thus obtained is stirred, preferably at a speed of 200-300 rpm, for 1-2 hours at room temperature.

At the end of this time period, a precipitate which is then separated from the liquid phase by means of filtration is obtained, i.e. iron oxalate.

The amount of iron (Fe) recovered is more than 95% with respect to the treated powder content.

### V. Collection of the solutions produced in the preceding operations and their re-use for treatment of new neodymium magnet powder

In a preferred embodiment of the invention, the solution obtained from this iron separation step (stage IV) is re-used for the leaching of new permanent magnet powder (Va). It may be used again both as such and after the addition of citric acid.

In accordance with that already mentioned in the description, both the organic solution and the aqueous solution produced at the end of the stripping process with phosphoric acid (stage III) may be used again in the process (see references Vb and Vc in the schematic diagram of Figure 1): the former may be used for the solvent extraction step to be carried out on the liquid component obtained from leaching (Vb) and the latter may be used for stripping of the rare earths from the organic phase obtained in the preceding step (Vc).

The resultant process may therefore be advantageously regarded as being a "closed" process in which no waste products are produced.

### EXAMPLE

The method according to the invention was carried out as described below.

After physical, mechanical and thermal pre-treatment of the permanent magnets obtained from HDDs of personal computers, the powder obtained was tested for recovery of the precious elements contained in it.

With reference to the first leaching step, 10g of powder were added to a 250 ml glass flask previously filled with 100 ml of a solution of distilled water and citric acid in a concentration of 1.5 M.

The mixture was stirred for a period of 3 hours, followed by a filtration step in order to obtain separation of the liquid phase from the solid phase.

After separation of the solution (volume equal to 98 ml) washing of the solid residue using 30 ml of water was performed.

Chemical analysis of the solid residue (0.55 g) showed an Ni content of 61.3% by weight.

After mixing of the liquid phase with the washing water, the mixture obtained was subjected to the extraction procedure using solvent: the organic phase used was a solution of DEHPA in n-heptane having a concentration of 50% by volume. The volume ratio between organic phase and aqueous phase was equal to 1.

The extraction process using organic solvent was carried out for 20 minutes whilst stirring. In order to separate these two phases a mixer settler was used.

The aqueous phase was then subjected to precipitation with oxalic acid in order to precipitate the iron and the organic phase was subjected to stripping/precipitation with phosphoric acid in order to recover the rare earths.

The stripping process was carried out using a solution of phosphoric acid, concentration 1.8 M, having a volume 1.5 times greater than the volume of the organic phase. After 1 hour of stirring, the phases were separated using the mixer settler. The precipitates were separated from their solutions by means of filtration and then washed with water. Depending on the weights of the final products and also on the basis of the chemical analysis of the solutions, more than 98% of Nd, Pr, Ni and Fe were purified.

Furthermore, after reintegration of the solution obtained from the precipitation of the iron using oxalic acid with 0.4 M of citric acid, said solution was used again for the leaching of a further 10 g of permanent magnets in powder form. At the end of the process, the same recovery efficiency was achieved for all the elements. The same results were obtained by re-use the organic solvent for extraction of rare earths and stripping them using the same phosphoric acid solution.

As can be seen from the above description, the method according to the present invention uses ecological solvents such as citric acid and oxalic acid with a consequent reduction in the substances which have a relatively greater impact on the environment and on persons.

## Claims

1. Hydrometallurgical process for the treatment of neodymium (Nd) magnets, comprising the following main stages:
I. obtaining suitably pre-treated neodymium (Nd) magnet powder and separating nickel in solid form by leaching said powder with citric acid and subsequent filtration of the nickel from the solution;
II. separating rare earth elements from the solution produced in the leaching stage (I) by means of extraction with organic solvent and subsequent separation of the aqueous phase, containing iron ions, and organic phase;
III. isolating by means of precipitation said rare earth elements in the form of phosphorus salts by stripping said organic phase with a solution of phosphoric acid, separation of the organic phase and aqueous phase and filtration of the precipitate from said last aqueous phase;
IV. isolating by means of precipitation said iron ions in the form of oxalates by treating with oxalic acid the aqueous phase obtained from the organic solvent extraction stage (II) and subsequent filtration of the precipitate;
V. repeating stages I-IV for treatment of further neodymium (Nd) magnet powder so that the following conditions are satisfied:
a) the solution obtained from separation of the iron (stage IV) is used for leaching of said further permanent magnet powder (Va), as such or after addition of citric acid;
b) the organic solution produced at the end of the stripping process with phosphoric acid (stage III) is used in the stage for extraction with organic solvent (stage II) to be carried out on the liquid component produced from leaching (Vb);
c) the aqueous solution produced at the end of the stripping process with phosphoric acid (stage III) is used in the stage for stripping of further organic phase (Vc).

2. Hydrometallurgical process for the treatment of neodymium (Nd) magnets according to claim 1, wherein stage I comprises the step of mixing said powder with a citric acid solution having a concentration of 1-2 M, preferably 1.5 M, and performing stirring for a period of 2-4 hours, preferably for 3 hours.

3. Hydrometallurgical process for the treatment of neodymium (Nd) magnets according to one of the preceding claims, wherein the stage I comprises the step of performing washing of the nickel in solid form with distilled water and combining the aqueous phase obtained from leaching (I) with the washing water.

4. Hydrometallurgical process for the treatment of neodymium (Nd) magnets according to one of the preceding claims, wherein the organic solvent used in the solvent extraction stage (II) is a solution of bis (2-ethylhexyl) phosphate (DEHPA or HDEHP) in n-heptane with a concentration in the range of 40-60% by volume, and preferably equal to 50%.

5. Hydrometallurgical process for the treatment of neodymium (Nd) magnets according to claim 4, wherein extraction with organic solvent is performed while stirring for a period of between 15 and 20 minutes.

6. Hydrometallurgical process for the treatment of neodymium (Nd) magnets according to one of the preceding claims, wherein the solution of phosphoric acid used in the stripping process (III) has a concentration of about 1.5 - 2 M, preferably equal to 1.8 M, and said process lasts for a period of 1-2 hours.

7. Hydrometallurgical process for the treatment of neodymium (Nd) magnets according to one of the preceding claims, wherein the oxalic acid used in stage IV has a concentration equal to or less than the stoichiometric quantity required for reaction with said iron.

8. Hydrometallurgical process for the treatment of neodymium (Nd) magnets according to one of the preceding claims, wherein the magnets are of the NdFeB permanent magnet type.

## Patentansprüche

1. Hydrometallurgisches Verfahren zur Behandlung von Neodymium (Nd) Magneten, beinhaltend die folgenden Hauptstadien:
I. Beschaffen von auf geeignete Weise vorbehandeltem Neodymium (Nd) Magnetpulver und Abtrennen von Nickel in fester Form, indem das besagte Puder mit Zitronensäure ausgewaschen wird und anschliessend das Nickel aus der Lösung filtriert wird;
II. Abtrennen von seltenen Erdelementen aus der Lösung, welche im Auswasch-Stadium (I) hervorgebracht wurde, mittels Extraktion mit einem organischen Lösungsmittel und anschliessendes Abtrennen der wässrigen Phase, welche Eisenionen enthält, und der organischen Phase;
III. Isolieren mittels Präzipitation der besagten seltenen Erdelemente in der Form von Phosphorsalzen durch Abbeizen der besagten organischen Phase mit einer Lösung von Phosphorsäure, Trennen der organischen Phase und wässrigen Phase und Filtrieren des Präzipitats von der besagten letzten wässrigen Phase;
IV. Isolieren mittels Präzipitation der besagten Eisenionen in Form von Oxalaten durch Behandeln der wässrigen Phase, welche von dem Stadium (II) der Extraktion von organischem Lösungsmittel hervorgebracht wurde, mit Oxalsäure, und anschliessendes Filtrieren des Präzipitats;
V. Wiederholen von Stadien I-IV für die Behandlung von weiterem Neodymium (Nd) Magnetpulver, sodass die folgenden Bedingungen erfüllt sind:
a) die Lösung, welche bei der Abtrennung des Eisens (Stadium IV) hervorgebracht wurde, wird verwendet für das Auswaschen des besagten weiteren Permanentmagnetpulvers (Va) als solches, oder nach der Zugabe von Zitronensäure;
b) die organische Lösung, welche am Ende des Abbeiz-Verfahrens mit Phosphorsäure (Stadium III) hervorgebracht wird, wird verwendet im Stadium für die Extraktion mit organischem Lösungsmittel (Stadium II), auszuführen auf der flüssigen Komponente, welche vom Auswaschen (Vb) hervorgebracht wird;
c) die wässrige Lösung, welche am Ende des Abbeiz-Verfahrens mit Phosphorsäure hervorgebracht wird (Stadium III) wird verwendet im Stadium für das Abbeizen von weiterer organischer Phase (Vc).

2. Hydrometallurgisches Verfahren zur Behandlung von Neodymium (Nd) Magneten gemäss Anspruch 1, wobei Stadium I den Schritt beinhaltet, das besagte Puder zu mischen mit einer ZitronensäureLösung, welche eine Konzentration von 1-2 M aufweist, vorzugsweise 1.5 M, und für einen Zeitraum von 2-4 Stunden, vorzugsweise 3 Stunden, zu rühren.

3. Hydrometallurgisches Verfahren zur Behandlung von Neodymium (Nd) Magneten gemäss einem der vorhergehenden Ansprüche, wobei das Stadium I den Schritt beinhaltet, das Nickel in fester Form mit destilliertem Wasser zu waschen, und die wässrige Phase, welche beim Auswaschen (I) hervorgebracht wurde, mit dem Waschwasser zu kombinieren.

4. Hydrometallurgisches Verfahren zur Behandlung von Neodymium (Nd) Magneten gemäss einem der vorhergehenden Ansprüche, wobei das organische Lösungsmittel, welches im Stadium (II) der Lösungsmittel-Extraktion verwendet wird, eine Lösung von Bis(2-ethylhexyl)Phosphat (DEHPA oder HDEHP) in n-Heptan ist, mit einer Konzentration im Bereich von 40-60% pro Volumen, und vorzugsweise gleich 50%.

5. Hydrometallurgisches Verfahren zur Behandlung von Neodymium (Nd) Magneten gemäss Anspruch 4, wobei die Extraktion mit organischem Lösungsmittel unter Rühren während eines Zeitraums von zwischen 15 und 20 Minuten ausgeführt wird.

6. Hydrometallurgisches Verfahren für die Behandlung von Neodymium (Nd) Magneten gemäss einem der vorhergehenden Ansprüche, wobei die Lösung von Phosphorsäure, welche im Abbeizverfahren (III) verwendet wird, eine Konzentration von etwa 1.5 - 2 M, vorzugsweise gleich 1.8 M aufweist, und wobei das besagte Verfahren für einen Zeitraum von 1 - 2 Stunden andauert.

7. Hydrometallurgisches Verfahren für die Behandlung von Neodymium (Nd) Magneten gemäss einem der vorhergehenden Ansprüche, wobei die Oxalsäure, welche in Stadium IV verwendet wird, eine Konzentration aufweist, welche gleich oder kleiner ist als die stöchiometrische Menge, welche für eine Reaktion mit dem besagten Eisen nötig ist.

8. Hydrometallurgisches Verfahren für die Behandlung von Neodymium (Nd) Magneten gemäss einem der vorhergehenden Ansprüche, wobei die Magneten vom Typ des NdFeB Permanentmagneten sind.

## Revendications

1. Un procédé hydrométallurgique de traitement d'aimants au néodyme (Nd), comprenant les principales étapes suivantes :
I. obtenir une poudre d'aimant au néodyme (Nd) convenablement prétraitée et séparer le nickel sous forme solide en lixiviant ladite poudre avec de l'acide citrique et en filtrant ultérieurement le nickel à partir de la solution ;
II. séparer les terres rares à partir de la solution produite dans l'étape de lixiviation (I) au moyen d'une extraction avec un solvant organique et en séparant ultérieurement la phase aqueuse, contenant des ions de fer, et la phase organique ;
III. isoler au moyen d'une précipitation lesdites terres rares sous forme de sels de phosphore par strippage de ladite phase organique avec une solution d'acide phosphorique, séparation de la phase organique et de la phase aqueuse et filtration du précipité de ladite dernière phase aqueuse ;
IV. isoler au moyen d'une précipitation lesdits ions de fer sous forme d'oxalates en traitant la phase aqueuse issue de l'étape d'extraction à l'aide du solvant (II) avec de l'acide oxalique et filtration ultérieure du précipité ;
V. répéter les étapes I à IV pour le traitement de poudre d'aimant au néodyme (Nd) supplémentaire de sorte que les conditions suivantes soient satisfaites :
a) la solution obtenue à partir de la séparation du fer (étape IV) est utilisée pour la lixiviation de ladite poudre d'aimant permanent supplémentaire (Va), telle quelle ou après addition d'acide citrique ;
b) la solution organique produite à l'issue du processus de strippage à l'acide phosphorique (étape III) est utilisée dans l'étape d'extraction au solvant organique (étape II) à effectuer sur la composante liquide issue de la lixiviation (Vb) ;
c) la solution aqueuse produite à l'issue du processus de strippage à l'acide phosphorique (étape III) est utilisée dans l'étape de strippage d'une phase organique supplémentaire (Vc).

2. Le procédé hydrométallurgique pour le traitement d'aimants au néodyme (Nd) selon la revendication 1, dans lequel l'étape I comprend l'étape de mélanger ladite poudre avec une solution d'acide citrique ayant une concentration de 1 à 2 M, de préférence de 1,5 M, et d'effectuer une agitation pendant une période de 2 à 4 heures, de préférence pendant une période de 3 heures.

3. Le procédé hydrométallurgique de traitement d'aimants au néodyme (Nd) selon l'une des revendications précédentes, dans lequel l'étape I comprend l'étape d'effectuer un lavage du nickel sous forme solide avec de l'eau distillée et de combiner la phase aqueuse issue de la lixiviation (I) avec l'eau de lavage.

4. Le procédé hydrométallurgique de traitement d'aimants au néodyme (Nd) selon l'une des revendications précédentes, dans lequel le solvant organique utilisé dans l'étape d'extraction par solvant (II) est une solution de phosphate de bis(2-éthylhexyle) (DEHPA ou HDEHP) dans du n -heptane à une concentration comprise dans la plage de 40 et 60 % en volume, et de préférence égale à 50 %.

5. Le procédé hydrométallurgique de traitement d'aimants au néodyme (Nd) selon la revendication 4, **caractérisé en ce que** l'extraction par solvant organique est effectuée sous agitation pendant une période comprise entre 15 et 20 minutes.

6. Le procédé hydrométallurgique de traitement d'aimants au néodyme (Nd) selon l'une des revendications précédentes, dans lequel la solution d'acide phosphorique utilisée dans le procédé de strippage (III) a une concentration d'environ 1,5 à 2 M, de préférence égale à 1,8 M, et ledit processus s'étend pendant une période de 1 à 2 heures.

7. Le procédé hydrométallurgique de traitement d'aimants au néodyme (Nd) selon l'une des revendications précédentes, dans lequel l'acide oxalique utilisé à l'étape IV a une concentration égale ou inférieure à la quantité stoechiométrique nécessaire à la réaction avec ledit fer.

8. Le procédé hydrométallurgique de traitement d'aimants au néodyme (Nd) selon l'une des revendications précédentes, dans lequel les aimants sont du type aimant permanent NdFeB.
